# EUROPEAN PATENT APPLICATION

(11) **EP 3 686 108 A1**
(43) Date of publication of application: **29.07.2020**
(21) Application number: 20153208.2
(22) Date of filing: 22.01.2020
(51) Int. Cl.: B64D 13/08, G06Q 50/28, G06Q 10/08, B64C 39/02

(54) **CONTAINER MONITORING AND CONTROL BY UNMANNED AERIAL VEHICLE**

(30) Priority: 25.01.2019 IN 201911003129; 17.12.2019 US 201916716742
(71) Applicant: Carrier Corporation, Palm Beach Gardens, FL 33418 (US)
(72) Inventor: SELVAKANI, Kanna, 500 081 Telangana (IN); PILLI, Srinivasa Reddy, 500 081 Telangana (IN); KOLLAPUDI, Kiran Kumar, 500 081 Telangana (IN)
(74) Representative: Dehns

(57) **Abstract**

A system (120) includes a plurality of containers (122) and a plurality of controllers (124). Each of the controllers are associated with a respective one of the plurality of containers. An unmanned aerial vehicle (134) is configured for wireless communication with the plurality of controllers.

## Description

Intermodal shipping containers are in widespread use for transporting a variety of items. An advantage of such containers is that they can be used by different carriers without unloading the contents of the container. For example, the same container can be loaded, placed onto a truck, carried to a shipping port, removed from the truck and placed onto a ship that carries the still-loaded container to another location. Other transporting scenarios are possible with such containers.

Containers may be stacked up and placed over grounds, yards, inside vessels, or in other areas. Each container may include a controller that controls various parameters associated with the container, including those associated with a refrigeration unit on the container in some examples. In some examples, from loading to unloading, the container should maintain the required parameters, such as temperature or percentage of gases (CO2, O2, etc.) in some examples. Trained service personnel may access the controller periodically to assess the health and status of the container.

According to a first aspect, there is provided a system comprising a plurality of containers and a plurality of controllers. Each of the controllers are associated with a respective one of the plurality of containers. An unmanned aerial vehicle is configured for wireless communication with the plurality of controllers.

The unmanned aerial vehicle may be configured to perform a firmware upgrade on the plurality of controllers.

The unmanned aerial vehicle may be configured to read temperatures from the plurality of controllers associated with the respective plurality of containers.

The unmanned aerial vehicle may be controllable from a remote location and includes a device.

The unmanned aerial vehicle may be configured to communicate data from the plurality of controllers to the device.

The system may include a plurality of refrigerant circuits. Each of the refrigerant circuits may be associated with a respective one of the containers. Each of the refrigerant circuits may be controllable by the controller on the respective container. The unmanned aerial vehicle may be configured to monitor the health of the plurality of refrigerant circuits through communication with the plurality of controllers.

The unmanned aerial vehicle may include an image capture unit configured to take at least one of photo and video of the plurality of containers.

The unmanned aerial vehicle may include a microphone that is configured to conduct a noise check on the plurality of containers.

According to a second aspect, there is provided a method of communication between a container and an unmanned aerial vehicle according to an example of the present disclosure includes flying the unmanned aerial vehicle to a location of the container, initiating wireless communication between the container and the unmanned aerial vehicle, and exchanging data between the container and the unmanned aerial vehicle through the wireless communication.

The method may include exchanging data includes sending control information from the unmanned aerial vehicle to a controller on the container.

The method may include exchanging data includes receiving information associated with the container from a controller on the container.

The method may include exchanging data includes a firmware upgrade to a controller of the container.

The method may include exchanging data is associated with a refrigeration unit of the container.

The method may include exchanging data includes performing a health check of the refrigeration unit.

The method may include exchanging data includes receiving return air and delivery air temperatures of the refrigeration unit.

Before the initiating step, the container may be authenticated.

Data associated with the exchanging may be communicated from the unmanned aerial vehicle to a platform.

The unmanned aerial vehicle may be controlled from a remote location distanced from the container.

The unmanned aerial vehicle may include a microphone, and the method may include performing a noise check on the container with the microphone.

These and other features may be best understood from the following specification and in which certain embodiments are described by way of example only with reference to the drawings, the following of which is a brief description.
Figure 1 schematically illustrates a prior art system for communicating with containers.
Figure 2 schematically illustrates a system for communicating with containers using an unmanned aerial vehicle.
Figure 3 schematically illustrates communication within the system of Figure 2.
Figure 4 schematically illustrates a method of communication between a container and an unmanned aerial vehicle.

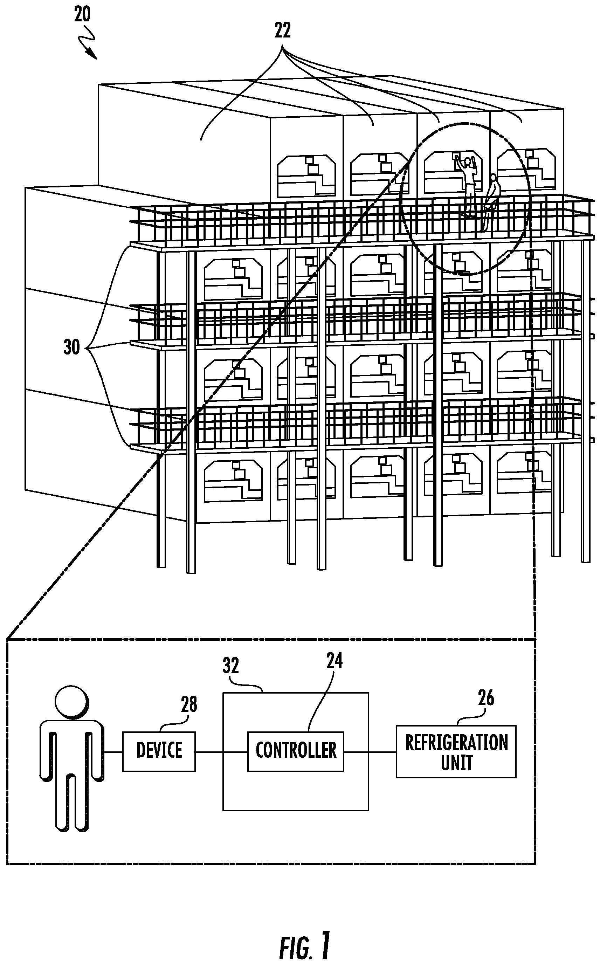

Figure 1 schematically illustrates a prior art system 20 for communicating with a number of containers 22. The illustrated example containers 22 are intermodal containers that can be loaded and transferred among different carriers during a transportation cycle. Other types of containers may be used. Each of the containers 22 includes a controller 24, which may be accessed through an access opening 32 at the side of the container 22. The controller 24 may control various parameters of the container 22, including control of a refrigeration unit 26 of the container 22 in some examples. The example refrigeration unit 26 provides refrigeration or temperature control for at least a portion of the interior of the container 22.

A worker may use one or more handheld devices 28 to communicate with the controller 24 to perform various monitoring or maintenance functions. Because several containers 22 may be stacked on top of one another, a ladder 30 may be provided adjacent the ends of the containers 22 such that the worker can access the controllers 24 of the multiple containers 22 through their access openings 32.

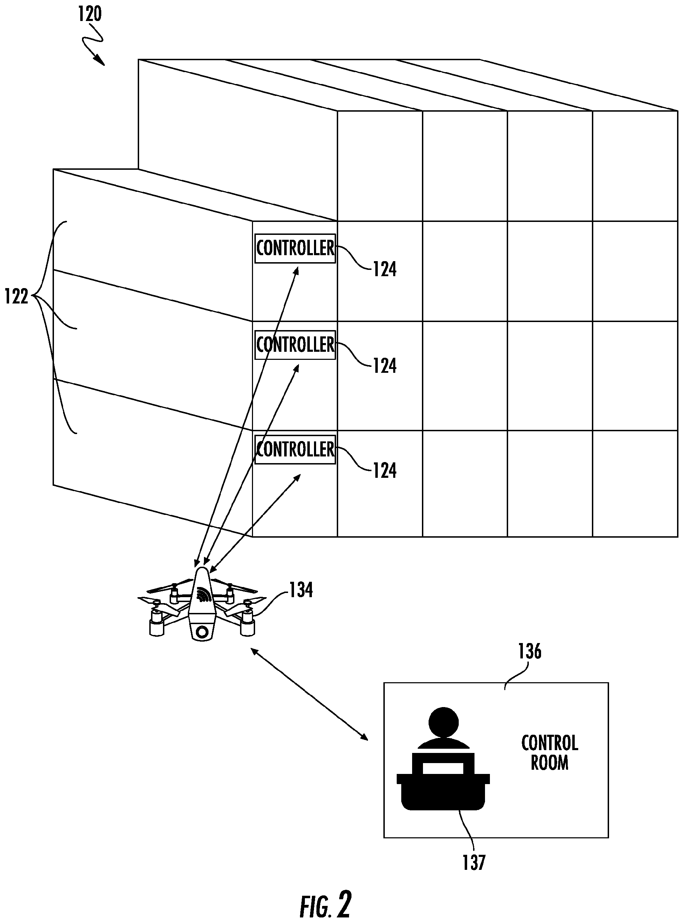

Figure 2 schematically illustrates a system 120 including containers 122. It should be understood that like reference numerals identify corresponding or similar elements throughout the several drawings. Each container 122 has an associated controller 124.

An unmanned aerial vehicle (UAV) 134 is able to fly to locations near the controllers 124 and wirelessly communicate with the controllers 124. The UAV 134 may be any aircraft without a human pilot aboard. In some examples, the UAV 134 is a commercial mobility UAV capable of carrying various embedded devices (e.g., image capture unit, communicating devices, microphone). In some examples, the UAV 134 is a low altitude UAV. In some examples, the UAV 134 is capable of carrying a pay load of 10-15 kgs (22-33 lbs). The UAV 134 may be in wireless communication with another platform, such as a control station 136 in the illustrative example. In some examples, the UAV 134 may communicate data from the controllers 124 to the control station 136. The control station may include one or more computing devices 137, which may be configured to receive the data and/or control the UAV 134 in some examples.

As explained further below, the UAV 134 is controllable to exchange data with the containers 122 to perform any one or combination of monitoring, control, and/or maintenance functions for the containers 122, eliminating the need for workers to physically access the controllers 124 at the containers 122 and use ladders erected near the containers 122. In some examples, the UAV 134 is controllable remotely from the control station 136 by an operator located in the control station 136. The control station 136 may be located in a yard, in vessels or in a container sender and receiver office in some examples.

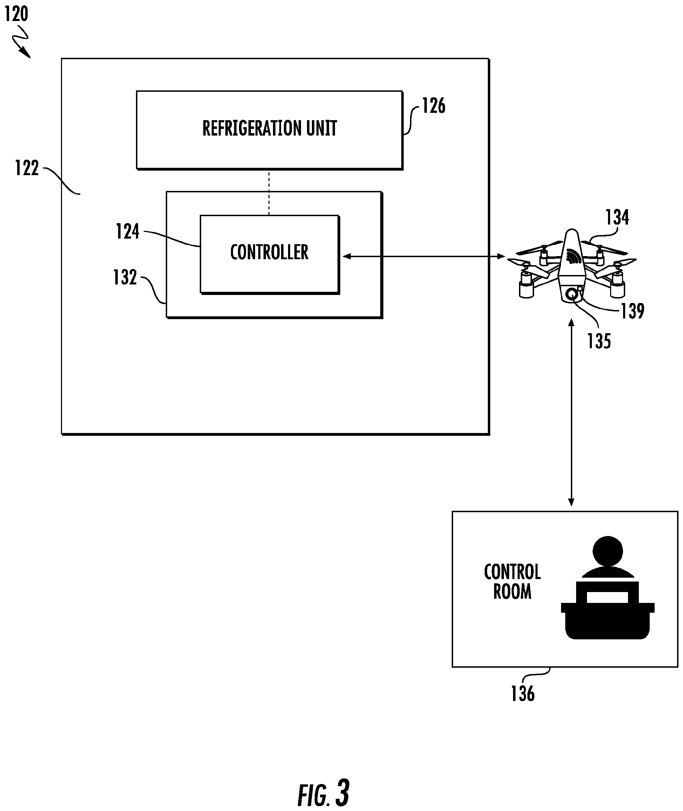

Figure 3 schematically illustrates communication within the system 120 including a container 122 having a controller 124 accessible through an access opening 132 and in communication with a refrigeration unit 126 on the container 122. The UAV 134 communicates with the controller 124 wirelessly. In some examples, the wireless communication protocols may be Wi-Fi, Bluetooth, Li-Fi and/or ZigBee. The UAV 134 and containers 122 or controllers 124 may therefore be enabled with various wireless communication devices in some examples. Although one container 122 is shown for illustrative purposes, the UAV 134 may be capable of wireless communication with controllers 124 of multiple containers 122.

The UAV 134 communicates data from the controller 124 and/or other data associated with the container 122 to the control station 136, in some examples. Alternatively or additionally, the UAV 134 communicates data to other platforms, including Satellite, GSM, CDMA, or cloud-based platforms, in some examples.

In some examples of wireless communication between the UAV 134 and the controllers 124, the UAV 134 performs a firmware upgrade on one or more controllers 124. The UAV 134 may check the version of firmware on the controller 124 against the most current version, which would be preloaded on the UAV 134. If the firmware on the controller 124 is not current, the UAV would transfer the files to the controller 124 and run the upgrade. In some examples, the UAV verifies the respective controllers 124 with valid credentials before connecting.

As another example of wireless communication between the UAV 134 and the controllers 124, the UAV 134 may perform health checks of the containers 122. The health check verifies various system components and their proper functional operations.

As another example of wireless communication between the UAV 134 and the controllers 124, the UAV 134 may configure properties of the container 122. In some examples, the UAV may communicate with the controller to modify the temperature or other parameters (e.g., percentage of gases such as CO2 or O2; control modes, such as heating or cooling) of the refrigeration unit 126 within the container 122. An operator may therefore adjust parameters of the refrigeration unit by controlling the UAV 134 from a remote location, in some examples.

As another example of wireless communication between the UAV 134 and the controllers 124, the UAV 134 may read measurements associated with the container 122. In some examples, the UAV 134 may download from the controller one or more of return air temperature, supply air temperature, air flow, container pressure, etc., associated with the refrigeration unit. The UAV 134 may then send the data to the control station 136 for logging.

The UAV 134 may include an image capture unit 135 for capturing photographs and/or videos of the containers 122. In some example, the UAV 134 takes photographs and/or videos to ensure container 122 components are damage free, determine the position of the container, and/or to determine if there is an emergency, such as a fire or flooding. The photographs and/or videos may then be communicated back to the control station 136.

The UAV 134 may include a microphone 139 for performing noise checks associated with the refrigeration unit 126. In some examples, the UAV 134 records sounds, and noise levels are compared to threshold acceptable levels, such as at the control station 136 in some examples.

In some examples, the UAV 134 and the containers 122 may utilize geotagging with a global positioning system (GPS), such that a geographical location of a container 122 may be logged. In some examples, the geographical locations may be communicated to service personnel to achieve immediate maintenance and repair when needed. In some examples, the GPS may help in identifying incorrect position of a container 122. In some examples, the UAV 134 may pin the locations of the multiple containers 122 in an offline pinned map of the layout of the containers, and communicate that data to other locations or platforms, such as to somewhere it can be used by service personnel.

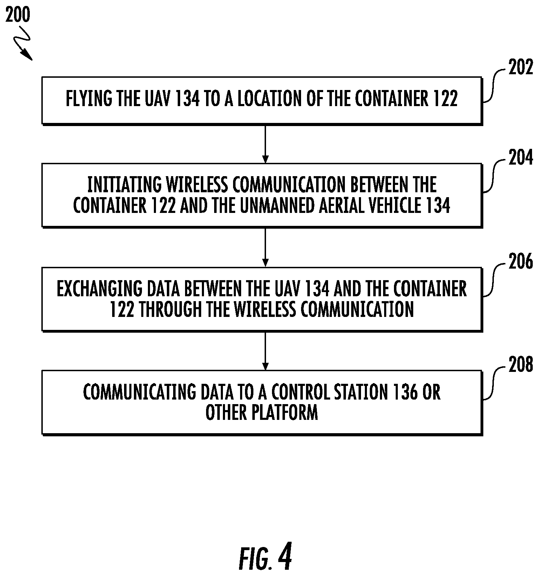

Figure 4 illustrates a flowchart of a method 200 that may be used, in some examples, with the example system 120 disclosed in Figures 2 and 3. The method 200 of communication between a container 122 and a UAV 134 may include, at 202, flying the UAV 134 to a location of the container 122. At 204, the method 200 may include initiating wireless communication between the container 122 and the unmanned aerial vehicle 134.

At 206, the method 200 may include exchanging data between the UAV 134 and the container 122 through the wireless communication. In some examples, the exchanging data includes sending control information from the UAV 134 to a controller 124 on the container 122. In some examples, the exchanging data includes receiving information associated with the container 122 from a controller 124 on the container 122.

At 208, the method may include communicating data to a control station 136 or other platform. In some examples, the UAV 134 may initiate from a location and return to that location after performing step 206 and/or 208 for one or more containers 122.

In some examples, the data exchanging step 206 includes performing a health check of the container 122. In some examples, a monitoring activity includes downloading data associated with the container 122. In some examples, the data exchanging step 206 includes reading return air and delivery air temperatures of the refrigeration unit 126. In some examples, the data exchanging step 206 includes a conducting a firmware upgrade. In some examples, the data exchanging step 206 includes adjusting parameters of a refrigeration unit located in the container 122. In some examples, the data exchanging step 206 is associated with a refrigeration unit 126 of the container 122. In some examples, the data may be associated with the data exchanging step 206.

In some examples, the UAV 134 may authenticate the container 122 before establishing wireless communication. Examples of authentication include providing access credentials for performing the required functional operations.

In some examples the UAV may be an autonomous UAV that may perform scheduled functions and report generation.

The system 120 and method 200, as compared with prior art systems and methods, save preloading and maintenance time, improve quality of maintenance, require less physical presence at the containers 122, increase safety, and reduce manual error.

Although the different embodiments are illustrated as having specific components, the embodiments of this disclosure are not limited to those particular combinations. It is possible to use some of the components or features from any of the embodiments in combination with features or components from any of the other embodiments.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A system (120) comprising:
a plurality of containers (122);
a plurality of controllers (124), each of the controllers being associated with a respective one of the plurality of containers; and
an unmanned aerial vehicle (134) configured for wireless communication with the plurality of controllers.

2. The system as recited in claim 1, wherein the unmanned aerial vehicle (134) is configured to perform a firmware upgrade on the plurality of controllers (124).

3. The system as recited in claim 1 or 2, wherein the unmanned aerial vehicle (134) is configured to read temperatures from the plurality of controllers (124) associated with the respective plurality of containers (122).

4. The system as recited in claim 1, 2 or 3 wherein the unmanned aerial vehicle (134) is controllable from a remote location including a device, optionally wherein the unmanned aerial vehicle (134) is configured to communicate data from the plurality of controllers (124) to the device.

5. The system as recited in any preceding claim, comprising:
a plurality of refrigerant circuits (126), each of the refrigerant circuits being associated with a respective one of the containers (122), each of the refrigerant circuits being controllable by the controller (124) on the respective container, wherein the unmanned aerial vehicle (134) is configured to monitor the health of the plurality of refrigerant circuits through communication with the plurality of controllers.

6. The system as recited in any preceding claim, wherein the unmanned aerial vehicle (134) includes an image capture unit (135) configured to take at least one of photo and video of the plurality of containers (122).

7. The system as recited in any preceding claim, wherein the unmanned aerial vehicle (134) includes a microphone (139) configured to conduct a noise check on the plurality of containers (122).

8. A method (200) of communication between a container and an unmanned aerial vehicle (134), the method comprising:
flying (202) the unmanned aerial vehicle to a location of the container (122);
initiating (204) wireless communication between the container and the unmanned aerial vehicle; and
exchanging data (206) between the container and the unmanned aerial vehicle through the wireless communication.

9. The method as recited in claim 8, wherein the exchanging data (206) includes sending control information from the unmanned aerial vehicle (134) to a controller (124) on the container (122).

10. The method as recited in claim 8 or 9, wherein the exchanging data (206) includes receiving information associated with the container (122) from a controller (124) on the container.

11. The method as recited in claim 8, 9 or 10, wherein the exchanging data (206) includes a firmware upgrade to a controller (124) of the container (122).

12. The method as recited in any one of claims 8 to 11, wherein the exchanging data (206) is associated with a refrigeration unit (126) of the container, optionally wherein the exchanging data (206) includes performing a health check of the refrigeration unit (126) and/or wherein the exchanging data (206) includes receiving return air and delivery air temperatures of the refrigeration unit (126)

13. The method as recited in any one of claims 8 to 12, the method comprising:
before the initiating step (204), authenticating the container (122).

14. The method as recited in any one of claims 8 to 13, the method comprising:
communicating data (208) associated with the exchanging from the unmanned aerial vehicle (134) to a platform.

15. The method as recited in any one of claims 8 to 14, the method comprising:
controlling the unmanned aerial vehicle (134) from a remote location distanced from the container (122), and/or wherein the unmanned aerial vehicle (134) includes a microphone (139), the method comprising performing a noise check on the container (122) with the microphone.
